# EUROPEAN PATENT SPECIFICATION

(11) **EP 2 876 628 B1**
(45) Date of publication and mention of the grant of the patent: **04.10.2017**
(21) Application number: 15158063.6
(22) Date of filing: 06.03.2015
(51) Int. Cl.: G09F 3/20, G02F 1/1333

(54) **Electronic shelf label**
Elektronisches Regaletikett
Étiquette électronique d'étagères

(43) Date of publication of application: 27.05.2015
(73) Proprietor: Pricer AB, 111 64 Stockholm (SE)
(72) Inventor: Sjödin, Håkan, 741 42 Knivsta (SE)
(74) Representative: Awapatent AB

(56) References cited:
- WO-A1-88/06773
- GB-A- 2 309 573
- GB-A- 2 462 334
- US-A1- 2005 046 760
- US-A1- 2008 218 471

## Description

### Field of the invention

The present invention relates to an electronic shelf label.

### Background of the invention

In different types of stores, for example supermarkets etc, electronic shelf labels, also refered to as ESL, are used for displaying information about the different products offered in the store. The information displayed is for example the product name, type of product as well as the price for each of the products.

The electronic shelf labels are communicating with a central control unit that makes it possible to frequently update, and change the information displayed on the labels which saves a considerable amount of time for the persons working in the store, especially if the number of different products sold in the store is high. As an example, a supermarket offers between 20000 and 50000 different products.

In some stores there is a need for displaying information in for example freezers where the temperature is well below 0° C (-18° C) which means that electronic shelf labels arranged in the freezer will be exposed to videly changing temperature conditions. Especially if the freezer door is frequently opened, for example by customers or staff that are rearanging or filling up the freezer, and the electronic shelf labels arranged close to the door are heated as long as the door is open, and cooled once again when the door is closed. Furthermore, in many freezers a defrosting cycle, i.e. the temperature in the cooling elements are raised a predetermined time to eliminate ice or frost from the cooling elements, is run at selected time intervals which expose the electronic shelf labels to temperature changes.The frequently changing temperature of the electronic shelf lable could result in technical problems, in particularly to electophoretical displays that tend to maintain previously displayed information on the display. This phenomen is refered to as "ghosting" and there is consequently a need for an improved electronic shelf label that is able to withstand changing temperature conditions and ensure the desired display of information.

### Summary of the invention

The present invention, defined in the appended claims, provides an electronic shelf label that fulfils the needs defined above.

The pre-amble of claim 1 discloses an electronic shelf label comprising:
a casing;
a display arranged in the casing;
a printed circuit board, PCB, enclosed by said casing;
a power source; and
a thermal element arranged within the casing.

GB 2 309 573 discloses the pre-amble of claim 1.

The electronic shelf label according to the invention fulfils the needs defined above since the thermal element arranged within the casing will adapt to the temperature surrounding the electronic shelf label. When the surrounding temperature suddenly is increased, for example when the door to the freezer is opened or the defrosting cycle is running, the thermal element will maintain the lower temperature of the display and reduce the changes of the display temperature. Thereby the problems following from these changes are reduced considerably.

In this invention, the thermal element is arranged in thermal contact with the display to improve the posibility for the thermal element to reduce the changes in the display temperature.

In one embodiment of the electronic shelf label, the thermal element is arranged between the display and the printed circuit board (PCB) in thermal contact with the display on the side of the display facing the interior of the casing.

In one embodiment of the electronic shelf label, the thermal element is fastened to the display by an adhesive to further improve the thermal contact between the thermal element and the display.

In one embodiment of the electronic shelf label, the thermal element is substantially rectangular with an area of at least 50 % of the area of the display. The shape of the thermal element is preferably the same as the shape of the display such that the thermal element covers as large area as possible of the display to ensure that as large are as possible of the display is protected from tempeature fluctuations. In one embodiment of the electronic shelf label, the thermal element has an area of at least 80 % of the area of the display in order to further improve the desired effect of the thermal element. If possible, the thermal element should cover 100% of the display area to achieve the best effect. This could however be difficult since the space within the ESL casing is limited.

In one embodiment of the electronic shelf label, the power source is at least one battery, solar cells, energy harvesting means or a combination of those and a super capacitor. The different power source alternatives could be used to adapt the electronic shelf label for use in different types of conditions.

In one embodiment of the electronic shelf label, the at least one battery is integrated in the thermal element. This embodiment is very favourable since the thermal mass of the battery, which is fitted in the ESL to power the ESL, is used as one part of the thermal element thereby saving space within the casing and reducing the amount of material that must be contained in the thermal element to achieve the desired effect.

In one embodiment of the electronic shelf label, the thermal element is formed as a plate. This embodiment is favourable since the plate could be shaped to correspond to the shape of the display still requiring a limited space within casing.

In one embodiment of the electronic shelf label, the plate is made of metal and has a thickness within the range of 1 mm to 5 mm. Metal materials are suitable beacause of their ability to store thermal energy, and the claimed thickness range ensures that enough thermal energy could be stored in the thermal element.

In an alternative embodiment of the electronic shelf label, the thermal element comprises a flexible enclosure filled with a fluid. This embodiment is favorable since the fluid provides an alternative to the metal plate since thermal energy is stored in the fluid instead of the metal plate. The fluid will adapt to the surrounding temperature and, if the temperature is below the freezing temperature of the fluid, freeze.

In one embodiment of the electronic shelf label, the fluid is water, or a mixture comprising water and additives to adapt the freezing temperature of the fluid. This embodiment is favorable since the additives make it possible to adapt the freezing temperature of the fluid and adapt the thermal element to the expected temperature conditions for the ESL during use. By adapting the freezing temperature of the fluid the possibility for the thermal element to reduce temperature changes in the ESL is maximized.

In one embodiment of the electronic shelf label, the volume of the fluid in the thermal element is within the range of 0.5 cm3 to 20 cm3. A volume within the claimed range ensures that the thermal element is able to store enough thermal energy required for the expected conditions during use of the ESL.

In one embodiment of the electronic shelf label, the thermal element furthermore comprises an intermediate plate arranged between the flexible enclosure filled with fluid and the display and in thermal contact with the flexible enclosure filled with fluid and the display. The intermediate plate improves the thermal contact between the display and the flexible enclosure which further improves the possibility for the thermal element to reduce fluctuations in the ESL temperature.

In one embodiment of the electronic shelf label, the size of the intermediate plate is substantially identical to the size of the flexible enclosure and adhesive is applied between the display and the intermediate plate.

In one embodiment of the electronic shelf label, the intermediate plate is made of metal. Metal materials are suitable beacause of their ability to store and transfer thermal energy.

In one embodiment of the electronic shelf label, the printed circuit board is fastened to the display on the side facing the interior of the casing and the thermal element is arranged on opposite side of the printed circuit board as the display. This embodimnet provides a very compact layout of the different components within the casing.

The different described embodiments of the ESL and the thermal element could of course be combined in different ways without departing from the scope of the invention that will be described more in detail in the detailed description.

### Brief description of the drawings

Different embodiments of the ESL according to the invention are illustrated in the appended figures.
- Figure 1: illustrates a perspective view of an ELS.
- Figure 2: illustrates an exploded view of a first embodiment of the ESL.
- Figure 3: illustrates an exploded view of a second embodiment of the ELS.
- Figure 4: illustrates an exploded view of a third embodiment of the ESL.
- Figure 5: illustrates an exploded view of a fourth embodiment of the ESL.

### Detailed description of embodiments

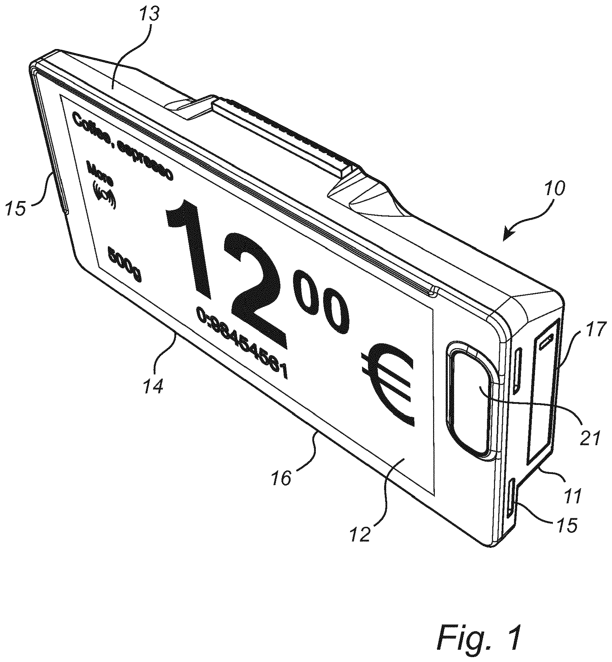

The ESL 10, illustrated in perspective in figure 1, comprises an enclosing casing 11 and a display area 12 arranged in one side of the casing. The casing is substantially rectangular with an upper 13 and lower side 14 arranged parallel to each other, two side surfaces 15, and a forward 16 and back 17 side. The forward side is substantially flat and comprises the display area 12. The casing 11 is made of at least a first 18 and a second 19 casing section in order to facilitate manufacturing of the different sections and the assembly of the different components enclosed by the casing 11. The transparent display area 12 is arranged in the first casing section 18 while the second casing section 19 is forming the back part of the casing 11. In an alternative embodiment of the casing, the display area is replaced by an opening in the casing such that the display, described more in detail further down this description, is exposed in the opening.

The casing 11 is for example made of a plastic material that provides the desired structural strength to protect the components within the casing, as well as the desired appearance of the ESL. The display area 12 is preferably as large as possible to improve the visibility of the ESL during use. The layout on the display is adapted to the specific use of the ESL.

Along the upper and lower side of the ESL, elongated protrusions 20 are extending. The elongated protrusions make it possible to fasten the ESL in a fastening rail arranged along the forward edge of a shelf or desk. The fastening rail, not illustrated in the figures, has a C-shaped cross section and encloses the back side of the ESL when the ESL is fastened in the intended position along the fastening rail.

In the forward side of the ESL, means 21 for communication between the ESL and a central control system is arranged. In the illustrated ESL, this communication means 21 involves means for infra red optical communication with a control unit centrally arranged in the store to ensure the desired communication between the ESL and central control system. However, other alternative systems for communication between the ESL and the central control system could be used and the means for communication arranged in the ESL are then adapted to the selected system for communication. Furthermore, the means for communication could be arranged in the side surfaces or integrated within the casing of the ESL as long as the desired contact between the ESL and the central control system is achieved.

Inside the display area 12 in the casing, a display 40 is arranged substantially parallel to the display area 12 in the casing. The display 40 comprises a display window 41 that is facing the display area 12 in the casing. The desired information is diplayed in the display window that has a rectangular shape corresponding to the display area 12 in the casing. The size of the display window is preferably made as large as possible. The display 40 is shaped like a substantially flat plate such that the side of the display facing the interior of the ESL also is substantially flat. The display is preferably an electophoretical display but other types of dislays could also be used.

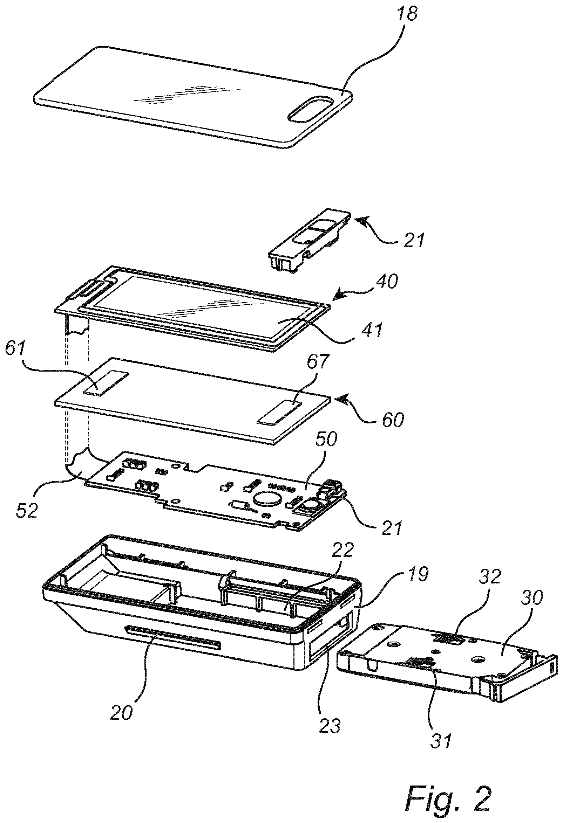

The ESL furthermore comprises a printed circuit board 50 arranged within the casing 11. The printed circuit board comprises the necessary components to operate the ELS, i.e. the communication with the central control system and the display 40. The printed circuit board 50 is substantially flat and arranged parallel to the display below the display in figure 2 to 4. Between the printed circuit board and the display 40 connecting means 52 extend for communication between the display and the printed circuit board.

Below the printed circuit board in figure 2 to 5, a battery cassette 30 is arranged in a cavity 22 in one of the side surfaces of the casing. The cavity 22 is arranged within the casing 11 and extends from a first opening 23 in one of the side surfaces of the casing into the ESL. The size and shape of the cavity 22 corresponds to the size and shape of the battery cassette 30.

The battery cassette 30 comprises at least one battery for powering the ESL. The number and size of the battery, or batteries, could however be changed to adapt the ESL to specific needs. The battery cassette furthermore comprises a first 31 and a second 32 contact element for connecting the two poles of the battery, or batteries, with corresponding contacts arranged on the side of the printed circuit board facing the battery cassette and thereby connect the battery in the battery cassette with the different components of the ESL that requires power to work as intended.

Alternative power sources for powering the ESL could be one or more solar cells, or a solar panel, any energy harvesting means or a combination of those arranged on the forward side, or the side surfaces of the ESL. These alternative power sources are preferably used in combination with a super capacitor to ensure that the requried power is provided over time.

The battery cassette and printed circuit board could however be modified and positioned differently within the ESL as long as the required components fit within the casing.

The different embodiments of the ESL according to the invention, illustrated in figure 2 to 5, comprise a thermal element 60, 70, 80, 90. The thermal element is intended to reduce thermal fluctuations in the ESL, and particularly in the display 40, when the surrounding temperature changes thereby eliminating, or at least reducing the risk for the problem referred to as "ghosting" described in background section of this application. The thermal element is in the illustrated embodiments arranged between the display 40 and the printed circuit board.

In order to achieve the best effect the thermal element is preferably arranged in thermal contact with the display. This could be achieved by a close contact between the surface of the thermal element and the side of the display facing the thermal element. This could be achieved by designing the different components or the ESL such that the thermal element is pressed against the display once the ESL is asembled. Alterantively, the thermal contact between the thermal element and the display could be improved by fastening the thermal element to the display by an adhesive 61, 71, 81 in the form of a glue or tape arranged between the contact surfaces of the display and thermal element. The adhesive is either applied in dots or stripes or covering the entire contact surface.

The first embodiment, figure 2, of the thermal element 61 is substantially rectangular with a shape corresponding to the shape of the display to cover as much of the display as possible. The size of the thermal element is preferably the same as the size of the display to ensure maximum effect of the reduction of temperature variations in the ESL. The thermal element is formed as a plate with substantially constant thickness within the range of 1 mm to 5 mm to ensure the desired thermal effect, and made of a metal material, such as for example aluminum.

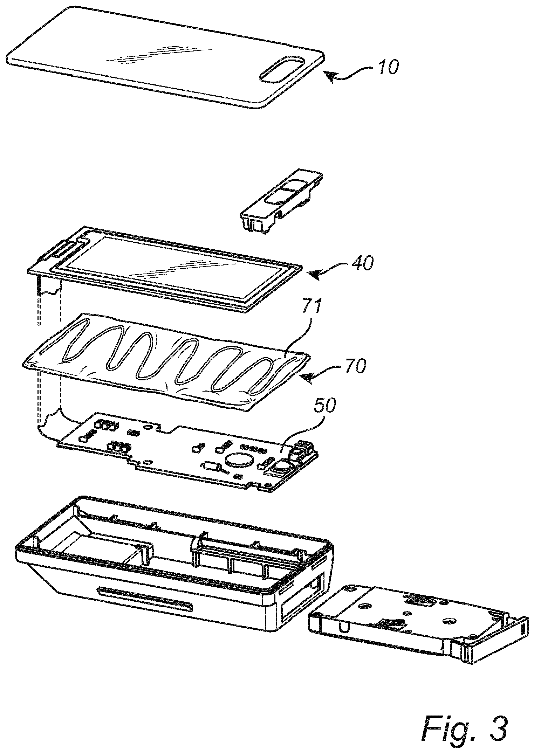

The second embodiment of the thermal element 71, illustrated in figure 3, has substantially the same shape as the first embodiment, i.e. rectangular with a shape corresponding to the shape of the display, to cover as much of the display as possible. This embodiment of the thermal element comprises a flexible enclosure made of a plastic or metal film that is sealed around the edges to form a sealed bag that is filled with a fluid. The fluid will adapt to the temperature surrounding the ESL and, when the surrounding temperature is changed, reduce the changes in the temperature within the ESL and display. The fluid is water, or a mixture comprising water and additives to adapt the freezing temperature of the fluid in order to adapt the thermal element to the specific conditions where the ESL is intended to be used. In order to ensure that the thermal element will be able to maintain the temperature in the display the volume of the fluid in the thermal element is within the range of 0.5 cm3 to 20 cm3.

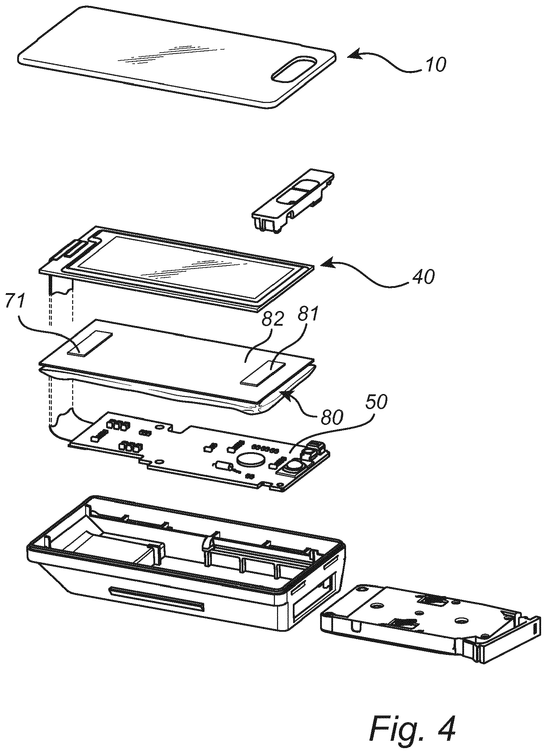

The third embodiment of the thermal element 80, illustrated in figure 4, has substantially the same shape as the first and second embodiment, i.e. rectangular with a shape corresponding to the shape of the display but comprises an intermediate plate arranged between a flexible enclosure filled with fluid and the display. The intermediate plate has a substantially constant thickness within the range of 0.2 mm to 1.5 mm and is made of a metal material, such as for example aluminum. The flexible enclosure filled with fluid is identical to the one used in the second embodiment, and the size of the intermediate plate and the flexible enclosure is preferably substantially identical. However, the intermediate plate improves the temperature distribution between the thermal element and the display which means that the flexible enclosure also could have slightly different shape still ensuring the desired effect which could be used to facilitate the manufacturing of the flexible enclosure. The intermediate plate is in thermal contact with the flexible enclosure and the display to further improve the thermal contact between the thermal element and the display, and thereby improve the efficiency of the thermal element.

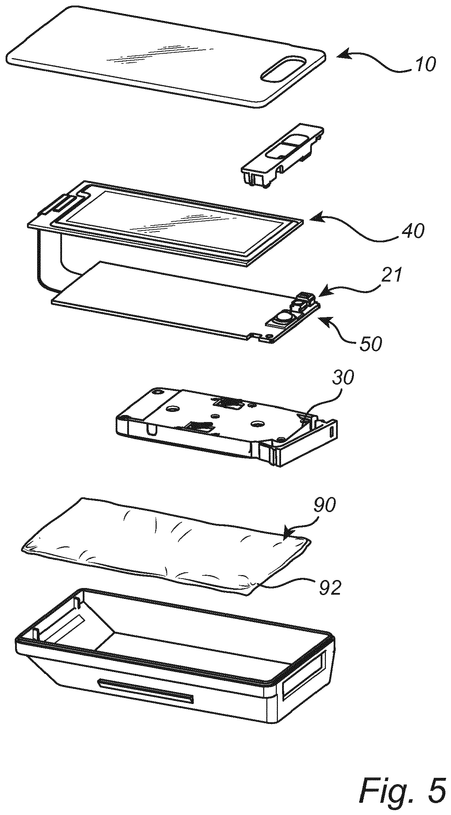

In a fourth embodiment of the thermal element, illustrated in the figure 5, the thermal element consists of a metal plate substantially identical to the thermal element of the first embodiment described above but in order to reduce the size of the different components arranged within the casing the at least one battery is forming a part of the thermal plate. The at least one battery is shaped like a circular plate or with a thickness corresponding to the thickness of the plate and fitted in a circular recess formed in the thermal element such that the mass of the battery is integrated in the thermal element and the required space within the casing reduced.

In a fourth embodiment the interior layout of the electronic shelf label components have been changed and the printed circuit board 50 fastened to the display on the side facing the interior of the casing. The different components attached to the printed circuit board has been arranged on the side of the printed circuit board that is facing towards the battery cassette to provide a flat contact surface of the side of the printed circuit board towards the display. The thermal element 90 in this embodiment is arranged on opposite side of the printed circuit board as the display, i.e. the printed circuit board arranged between the display and the thermal element 90 within the casing.

In order for this embodiment to be efficient, the thermal contact between the display, the printed circuit board 50 and the thermal element 90 must be good. The printed circuit board is either laminated or fastened by adhesive to the display, and the thermal element 90 fastened to the printed circuit board by adhesive, alternatively pressed against the surface of the printed circuit board after assembly.

The thermal element 90 in this embodiment comprises the flexible enclosure 92 filled with a fluid similar to the one previously described. The same features regarding size and dimensions that are presented in relation to the previously discussed embodiments are valid also in this embodiment.

This embodiment is particularly suitable for use in combination with a power source in the form of a at least one battery that is integrated in a recess in the metal plate thermal element.

The different embodiments described above could all be combined and modified in different ways without departing from the scope of the invention that is defined by the appended claims.

## Claims

1. Electronic shelf label (10) comprising:
a casing (11);
a display (40) arranged in the casing;
a printed circuit board (50), PCB, enclosed by said casing;
a power source (30); **characterized by** a thermal element (60: 70; 80; 90) arranged within the casing, wherein said thermal element is arranged in thermal contact with the display to maintain the temperature of the display and reduce changes of the display temperature.

2. The electronic shelf label according to anyone of claim 1, wherein the thermal element (60: 70; 80) is arranged between the display and the printed circuit board (PCB) in thermal contact with the display on the side of the display facing the interior of the casing.

3. The electronic shelf label according to claim 1 or 2, wherein the thermal element is fastened to the display by an adhesive (61; 71; 81).

4. The electronic shelf label according to anyone of the previous claims, wherein the thermal element (60) is substantially rectangular with an area of at least 50 % of the area of the display, and preferably at least 80 % of the area of the display.

5. The electronic shelf label according to anyone of the previous claims, wherein the power source is at least one battery (30), solar cells, energy harvesting means or a combination of those and a super capacitor.

6. The electronic shelf label according to claim 5, wherein the at least one battery is integrated in the thermal element.

7. The electronic shelf label according to anyone of the previous claims, wherein the thermal element (60) is formed as a plate.

8. The electronic shelf label according to claim 7, wherein the plate is made of metal, and has a thickness within the range of 1 mm to 5 mm.

9. The electronic shelf label according to anyone of claim 1 to 5, wherein the thermal element (70; 80) comprises a flexible enclosure filled with a fluid.

10. The electronic shelf label according to claim 9, wherein the fluid is water, or a mixture comprising water and additives to adapt the freezing temperature of the fluid.

11. The electronic shelf label according to claim 10, wherein the volume of the fluid in the thermal element is within the range of 0.5 cm3 to 20 cm3.

12. The electronic shelf label according to anyone of claim 11 to 12, wherein the thermal element (80) furthermore comprises an intermediate plate (82) arranged between the flexible enclosure filled with fluid and the display and in thermal contact with the flexible enclosure filled with fluid and the display.

13. The electronic shelf label according to claim 12, wherein the size of the intermediate plate is substantially identical to the size of the display, and adhesive is applied between the display and the intermediate plate.

14. The electronic shelf label according to claim 1, wherein the printed circuit board (50) is fastened to the display, either laminated to the display or fastened by adhesive to the display, on the side facing the interior of the casing and the thermal element (90) is arranged on opposite side of the printed circuit board as the display and said thermal element comprises a flexible enclosure (92) filled with a fluid.

## Patentansprüche

1. Elektronisches Regaletikett (10), aufweisend:
ein Gehäuse (11);
eine in dem Gehäuse angeordnete Anzeige (40);
eine von dem Gehäuse eingefasste Leiterplatte, PCB, (50);
eine Stromquelle (30);
**gekennzeichnet durch**
ein innerhalb des Gehäuses angeordnetes Thermoelement (60; 70; 80; 90),
wobei das Thermoelement in Thermokontakt mit der Anzeige angeordnet ist,
um die Temperatur der Anzeige beizubehalten und Änderungen der Anzeigetemperatur zu verringern.

2. Elektronisches Regaletikett nach Anspruch 1, wobei das Thermoelement (60; 70; 80) zwischen der Anzeige und der Leiterplatte (PCB) in Thermokontakt mit der Anzeige auf der Seite der Anzeige, die zum Inneren des Gehäuses weist, angeordnet ist.

3. Elektronisches Regaletikett nach Anspruch 1 oder 2, wobei das Thermoelement durch einen Klebstoff (61; 71; 81) an der Anzeige befestigt ist.

4. Elektronisches Regaletikett nach einem der vorhergehenden Ansprüche, wobei das Thermoelement (60) im Wesentlichen rechteckig mit einer Fläche von mindestens 50 % des Anzeigenbereichs, und vorzugsweise mindestens 80 % des Anzeigenbereichs, ist.

5. Elektronisches Regaletikett nach einem der vorhergehenden Ansprüche, wobei die Stromquelle mindestens eine Batterie (30), Solarzellen, Energiegewinnungsmittel oder eine Kombination von diesen und einem Superkondensator ist.

6. Elektronisches Regaletikett nach Anspruch 5, wobei die mindestens eine Batterie in dem Thermoelement integriert ist.

7. Elektronisches Regaletikett nach einem der vorhergehenden Ansprüche, wobei das Thermoelement (60) als eine Platte ausgebildet ist.

8. Elektronisches Regaletikett nach Anspruch 7, wobei die Platte aus Metall gefertigt ist und eine Dicke im Bereich von 1 mm bis 5 mm hat.

9. Elektronisches Regaletikett nach einem der Ansprüche 1 bis 5, wobei das Thermoelement (70; 80) eine flexible, mit einem Fluid gefüllte Hülle aufweist.

10. Elektronisches Regaletikett nach Anspruch 9, wobei das Fluid Wasser oder ein Gemisch ist, das Wasser und Zusatzstoffe aufweist, um die Gefriertemperatur des Fluids anzupassen.

11. Elektronisches Regaletikett nach Anspruch 10, wobei das Volumen des Fluids in dem Thermoelement im Bereich von 0,5 cm³ bis 20 cm³ liegt.

12. Elektronisches Regaletikett nach einem der Ansprüche 11 bis 12, wobei das Thermoelement (80) des Weiteren eine Zwischenplatte (82) aufweist, die zwischen der flexiblen, mit einem Fluid gefüllten Hülle und der Anzeige und in Thermokontakt mit der flexiblen, mit einem Fluid gefüllten Hülse und der Anzeige angeordnet ist.

13. Elektronisches Regaletikett nach Anspruch 12, wobei die Größe der Zwischenplatte im Wesentlichen identisch zur Größe der Anzeige ist und ein Klebstoff zwischen der Anzeige und der Zwischenplatte aufgebracht ist.

14. Elektronisches Regaletikett nach Anspruch 1, wobei die Leiterplatte (50) an der Anzeige befestigt ist, entweder an die Anzeige laminiert oder durch einen Klebstoff an der Anzeige befestigt ist, und zwar auf der Seite, die zum Inneren des Gehäuses weist, und das Thermoelement (90) auf der entgegengesetzten Seite der Leiterplatte angeordnet ist, da die Anzeige und das Thermoelement eine flexible, mit einem Fluid gefüllte Hülle (92) aufweisen.

## Revendications

1. Étiquette électronique pour étagère (10) comprenant :
un boîtier (11) ;
un affichage (40) disposé dans le boîtier ;
une carte de circuit imprimé (50), PCB, enceinte par ledit boîtier ;
une source d'énergie (30) ; **caractérisée par**
un élément thermique (60 : 70 ; 80 ; 90) disposé au sein du boîtier, dans lequel ledit élément thermique est disposé en contact thermique avec l'affichage afin de conserver la température de l'affichage et de réduire les variations de la température de l'affichage.

2. Étiquette électronique pour étagère selon la revendication 1, dans laquelle l'élément thermique (60 : 70 ; 80) est disposé entre l'affichage et la carte de circuit imprimé (PCB) en contact thermique avec l'affichage sur le côté de l'affichage faisant face à l'intérieur du boîtier.

3. Étiquette électronique pour étagère selon la revendication 1 ou 2, dans laquelle l'élément thermique est fixé à l'affichage par un adhésif (61 ; 71 ; 81).

4. Étiquette électronique pour étagère selon l'une quelconque des revendications précédentes, dans laquelle l'élément thermique (60) est substantiellement rectangulaire avec une surface d'au moins 50 % de celle de l'affichage, et de préférence au moins 80 % de celle de l'affichage.

5. Étiquette électronique pour étagère selon l'une quelconque des revendications précédentes, dans laquelle la source d'énergie est au moins une batterie (30), des cellules solaires, des moyens de récolte d'énergie ou une combinaison de ces derniers et un supercondensateur.

6. Étiquette électronique pour étagère selon la revendication 5, dans laquelle au moins une batterie est intégrée à l'élément thermique.

7. Étiquette électronique pour étagère selon l'une quelconque des revendications précédentes, dans laquelle l'élément thermique (60) est formé à la manière d'une plaque.

8. Étiquette électronique pour étagère selon la revendication 7, dans laquelle la plaque est réalisée en métal et possède une épaisseur située dans la plage de 1 mm à 5 mm.

9. Étiquette électronique pour étagère selon l'une quelconque des revendications 1 à 5, dans laquelle l'élément thermique (70 ; 80) comprend une enceinte flexible remplie de fluide.

10. Étiquette électronique pour étagère selon la revendication 9, dans laquelle le fluide est de l'eau ou un mélange comprenant de l'eau et des additifs afin d'adapter la température de congélation du fluide.

11. Étiquette électronique pour étagère selon la revendication 10, dans laquelle le volume du fluide dans l'élément thermique se situe dans la plage de 0,5 cm³ à 20 cm³.

12. Étiquette électronique pour étagère selon l'une quelconque des revendications 11 à 12, dans laquelle l'élément thermique (80) comprend en outre une plaque intermédiaire (82) disposée entre l'enceinte flexible remplie de fluide et l'affichage et est en contact thermique avec l'enceinte flexible remplie de fluide et l'affichage.

13. Étiquette électronique pour étagère selon la revendication 12, dans laquelle la taille de la plaque intermédiaire est substantiellement identique à la taille de l'affichage, et de l'adhésif est appliqué entre l'affichage et la plaque intermédiaire.

14. Étiquette électronique pour étagère selon la revendication 1, dans laquelle la carte de circuit imprimé (50) est fixée à l'affichage, soit laminée sur l'affichage soit fixée par adhésif sur l'affichage, sur le côté faisant face à l'intérieur du boîtier et l'élément thermique (90) est disposé sur un côté opposé de la carte de circuit imprimé car l'affichage et ledit élément thermique comprennent une enceinte flexible (92) remplie de fluide.
